# EUROPEAN PATENT SPECIFICATION

(11) **EP 3 480 000 B1**
(45) Date of publication and mention of the grant of the patent: **30.12.2020**
(21) Application number: 17199966.7
(22) Date of filing: 03.11.2017
(51) Int. Cl.: B29C 64/236, B29C 64/153, B29C 64/245, B33Y 10/00, B33Y 30/00, B22F 3/105

(54) **POWDER MODULE**
PULVERMODUL
MODULE D'ALIMENTATION

(43) Date of publication of application: 08.05.2019
(73) Proprietor: CL Schutzrechtsverwaltungs GmbH, 96215 Lichtenfels (DE)
(72) Inventor: Stammberger, Jens, 96472 Rödental (DE); Hofmann, Alexander, 96260 Weismain (DE); Stache, Lukas, 97500 Steinbach (DE); Jäger, Olaf, 96215 Lichtenfels (DE)
(74) Representative: Hafner & Kohl PartmbB

(56) References cited:
- EP-A1- 3 159 142
- WO-A2-2014/020085

## Description

The invention relates to a powder module for an apparatus for additively manufacturing three-dimensional objects, the powder module comprising a powder chamber having a power chamber volume and a carrying device, the carrying device comprising a carrying unit being moveably supported along a motion axis between a first position, particularly a lower end position, and a second position, particularly an upper end position, relative to the powder chamber and a drive unit for generating a drive force for moving the carrying unit between the first position and the second position or vice versa.

Respective powder modules for apparatuses for additively manufacturing three-dimensional objects are known from the field of additive manufacturing technology. WO2014020085 discloses a machine for the additive manufacturing of a three-dimensional object by sintering or melting powder. EP3159142 discloses a three-dimensional shaping apparatus.

Exemplary embodiments of respective powder module are a dose module, which is filled with build material and which is adapted to successively dose a specific amount of build material which is to be applied in a build plane of a respective apparatus during operation of the apparatus, a build module, in which the actual additive build-up of three-dimensional objects takes place and which is successively filled with build material during operation of the apparatus, or an overflow module, which is adapted to successively receive build material which was not consolidated during operation of the apparatus.

Known constructions of respective powder modules occasionally encounter problems with build material which negatively affects exactly moving and positioning the carrying unit relative to the powder chamber, e.g. by entering into the drive train for moving the carrying unit. Exactly moving and positioning the carrying unit is of high importance for the additive manufacturing process.

It is the object of the present invention to provide an improved powder module for an apparatus for additively manufacturing three-dimensional objects overcoming the aforementioned drawbacks.

The object is achieved by a powder module according to independent Claim 1. The Claims depending on Claim 1 relate to possible embodiments of the powder module according to Claim 1. The object is further achieved by a method according to claim 14.

The powder module described herein is a functional component for/of an apparatus (hereinafter "apparatus") for additively manufacturing three-dimensional objects, e.g. technical components, by means of successive layerwise selective irradiation and consolidation of layers of a build material - the build material may comprise at least one of a metal, a ceramic, or a polymer, for instance - which can be directly or indirectly consolidated by means of an energy beam. The energy beam may be an electron beam, a laser beam, or another optical beam, e.g. a UV beam, for instance. The apparatus can be a selective laser sintering apparatus, a selective laser melting apparatus, or a selective electron beam melting apparatus, or a metal binder jetting apparatus, for instance.

The powder module may be embodied as a dose module, which is filled with build material and which is adapted to successively dose a specific amount of build material which is to be applied in a build plane of a respective apparatus during operation of the apparatus, a build module, in which the actual additive build-up of three-dimensional objects takes place and which is successively filled with build material during operation of the apparatus, or an overflow module, which is adapted to successively receive build material which was not consolidated during operation of the apparatus.

The modular aspect of the powder module particularly may result from that the (entire) powder module may be a functional unit which may be separately handled, e.g. separately moved. As such, the powder module may be moved to a powder module related operating position of the apparatus.

The term "powder" generally refers to a build material which may be used in an additive manufacturing process. The build material does typically, yet not necessarily refer to a (fine) powder. Thus, the term "powder" is particularly not limited to a specific materiality, size (distribution), shape (distribution), etc. of build material.

The powder module comprises a powder chamber having a power chamber volume which is fillable or filled with powder (build material). The powder chamber and the powder chamber volume, respectively are typically defined by structural elements, particularly walls or wall portions, of the powder module. The bottom of the powder chamber may be defined by a carrying unit of a carrying device of the powder module, particularly by a build plate element forming a part of a typically stacked arrangement of functional elements of the carrying unit.

The powder module comprises a carrying device for carrying powder or - in the case that the powder module is a build module - at least one three-dimensional object which is additively built during operation of the apparatus the powder module is allocated to. As will be apparent from below, the carrying device comprises the required functional units of the powder module for carrying powder or a three-dimensional object which is additively built during operation of the apparatus the powder module is allocated to, respectively.

One functional unit of the carrying device is a carrying unit. The carrying unit is adapted to carry powder and/or a three-dimensional object which is additively built during operation of the apparatus the powder module is allocated to. The carrying unit may comprise a number of typically plate-like shaped functional elements in a (vertically) stacked arrangement. Respective functional elements may be a build plate element at least partly defining the build plane of the apparatus the powder module is allocated to, a tempering element, particularly a heating element, for tempering, particularly heating, the build plate element, and a carrying element for carrying the build plate element and the tempering element. As mentioned above, the carrying unit, i.e. particularly a respective build plate element, may define the bottom of the powder chamber.

The carrying unit is moveably supported along a (primary) motion axis between a first position, particularly a lower end position, and a second position, particularly an upper end position, relative to the powder chamber or within the powder chamber, respectively. The motion axis is typically a translational axis. The orientation of the motion axis is typically vertical. Yet, motions of the carrying unit may be rotational and/or translational (sub-)motions given that the resulting motion of the carrying unit is a motion along the motion axis. During operation of the apparatus the powder module is allocated to, motions of the carrying unit may be incremental, whereby each incremental motion of the carrying unit may correspond to the thickness of a build material layer which is applied in the build plane of the apparatus.

Another functional unit of the carrying device is a drive unit. The drive unit is adapted to generate a drive force for moving the carrying unit between the first position and the second position or vice versa. The drive unit may be built as or comprise at least one motor, e.g. an electric motor.

Another functional unit of the carrying device is a coupling unit. The coupling unit is adapted to structurally, particularly mechanically, couple the drive unit with the carrying unit. As such, the coupling unit is also adapted to transmit a drive force generated by the drive unit to the carrying unit. Thus, the drive unit and the coupling unit may build the drive train for moving the carrying unit.

The coupling unit is extendable between a first extension state and a second extension state. The first extension state of the coupling unit may correspond to the first position of the carrying unit, i.e. the coupling unit may be extended to the first extension state when the carrying unit is moved to the first position. Since the first position of the carrying unit may be a lower end position, the first extension state of the coupling unit may be a non-extended state in which the coupling unit is not extended. The second extension state of the coupling unit may correspond to the second position of the carrying unit, i.e. the coupling unit may be extended to the second extension state when the carrying unit is moved to the second position. Since the second position of the carrying unit may be an upper end position, the second extension state of the coupling unit may be an extended state in which the coupling unit is (fully) extended.

Another functional unit of the carrying device is a guiding unit for guiding motions of the carrying unit between. As such, the guiding unit is also adapted to stabilize the carrying unit in a desired, particularly horizonal, orientation (x-, y-orientation) relative to the powder chamber. The guiding unit therefore, is provided with the required structural, particularly mechanical, stability, i.e. particularly rigidity and/or stiffness, allowing for stabilizing the carrying unit in a desired, particularly horizonal, orientation. A desired orientation of the carrying unit typically is an exact plane arrangement of the or a build plate member of the carrying unit.

Similar to the coupling unit, the guiding unit is extendable between a first extension state and a second extension state. The first extension state of the guiding unit may correspond to the first position of the carrying unit, i.e. the guiding unit may be extended to the first extension state when the carrying unit is moved to the first position. Since the first position of the carrying unit may be a lower end position, the first extension state of the guiding unit may be a non-extended state in which the guiding unit is not extended. The second extension state of the guiding unit may correspond to the second position of the carrying unit, i.e. the guiding unit may be extended to the second extension state when the carrying unit is moved to the second position. Since the second position of the carrying unit may be an upper end position, the second extension state of the guiding unit may be an extended state in which the guiding unit is (fully) extended.

The guiding unit (entirely) surrounds the coupling unit. Since both the guiding unit and the coupling unit are extendable, surrounding the coupling unit by the guiding unit can be assured in any extension state. The guiding unit typically defines an inner volume in which the coupling unit is arranged. The guiding unit may thus, be deemed as housing of/for the coupling unit. The inner volume of the guiding unit may be or is shielded from the outside against undesired entry of build material. Hence, by arranging the coupling unit within the inner volume of the guiding unit, build material cannot negatively affect moving and positioning the carrying unit relative to the powder chamber. As a result, an improved powder module is provided.

The coupling unit may comprise a plurality of coupling segments being moveably supported relative to each other along a motion axis - which may coincide with the motion axis of the carrying unit - between a first arrangement corresponding to the first extension state of the coupling unit and a second arrangement corresponding to the second extension state of the coupling unit. Each coupling segment is provided with the required structural, particularly mechanical, stability required for the coupling function of the coupling unit; as such, each coupling segment may be built of or comprise a suitable material, e.g. a metal, or material structure of required structural, particularly mechanical, stability. A segmentation of the coupling unit into respective coupling segments - which may have a cylindrical or hollow-cylindrical shape - and a moveable support of the coupling segments allows for a reliable way of transferring the coupling unit between respective extension states. The coupling segments may be arranged in a telescopic arrangement; thus, the coupling unit may be a telescopic coupling unit which is extendable between a collapsed state (see first extension state of the coupling unit) and an extended state (see second extension state of the coupling unit). At least two coupling segments being moveably supported relative to each other may at least partly overlap in the direction of the motion axis which particularly results in structural stability of the arrangement of the coupling segments.

Similar to the coupling unit, the guiding unit may comprise a plurality of guiding segments being moveably supported relative to each other along a motion axis - which may coincide with the motion axis of the carrying unit - between a first arrangement corresponding to the first extension state of the guiding unit and a second arrangement corresponding to the second extension state of the guiding unit. Each guiding segment is provided with the required structural, particularly mechanical, stability required for the guiding function of the guiding unit; as such, each guiding segment may be built of or comprise a suitable material, e.g. a metal, or material structure of required structural, particularly mechanical, stability. A segmentation of the guiding unit into respective guiding segments - which may have a cylindrical or hollow-cylindrical shape - and a moveable support of the guiding segments allows for a reliable way of transferring the guiding unit between respective extension states. The guiding segments may be arranged in a telescopic arrangement; thus, the guiding unit may be a telescopic guiding unit which is extendable between a collapsed state (see first extension state of the coupling unit) and an extended state (see second extension state of the coupling unit). At least two guiding segments being moveably supported relative to each other may at least partly overlap in the direction of the motion axis which particularly results in structural stability of the arrangement of the guiding segments. yet, the overlap may also impede the entry of build material into the inner volume of the guiding unit.

Each guiding segment may be provided with suitable guiding elements, e.g. protrusions and/or receptacles, which co-act, e.g. engage, so as to provide a reliable guiding; as an example, a first guiding element provided with a first guiding segment may be built as or comprise a protrusion, e.g. in the shape of a guiding rail, and a second guiding element provided with a second guiding segment may be built as or comprise a receptacle, whereby the protrusion engages the receptacle. Of course, other arrangements and/or configurations of first and second guiding elements is conceivable.

The powder module may further comprise a sealing unit. The sealing unit is adapted to seal a (radial) gap between two (directly adjacently disposed) guiding segments being moveably supported relative to each other. The sealing unit typically provides a powder-proof sealing. The sealing unit comprising at least one sealing element, particularly disposed or extending between at least two guiding segments being moveably supported relative to each other.

A respective sealing element may be built as or comprise a, particularly ring-shaped, sealing lip extending between an outer wall portion of a, particularly cylindrical, first guiding segment and an inner wall portion of a, particularly cylindrical, second guiding segment. A respective sealing lip may be provided, i.e. particularly connected, with the first or second guiding segment. The sealing lip may be flexible, i.e. be built of a flexible material, e.g. an elastomer, or a flexible material structure, e.g. an elastomer structure.

A respective sealing element may also be built as or comprise a, particularly ring-shaped, sealing brush extending between an outer wall portion of a, particularly cylindrical, first guiding segment and an inner wall portion of a, particularly cylindrical, second guiding segment. A respective sealing brush may be provided, i.e. particularly connected, with the first or second guiding segment. The sealing brush may comprise a plurality of flexible bristles.

The sealing unit may comprise a plurality of sealing elements co-acting with each other so as to provide a suitable sealing. For the case that the sealing unit comprises at least two sealing elements, a first sealing element provided with a first or second guiding segment may be built as or comprise a receptacle for a receiving a protrusion of a second sealing element, and a second sealing element provided with a second or first sealing element may be built as or comprise a respective protrusion for engaging with respective a receptacle. As such, respective sealing elements may be provided with respective guiding elements mentioned above.

The powder module may further comprise at least one motion and/or position determination device, particularly a motion and/or position detection device, for determining, particularly detecting, a motion and/or a position of the carrying unit, particularly relative to a reference position of the powder module, e.g. the powder chamber, or the apparatus the powder module is allocated to. The motion and/or position determination device may be adapted to output an information about motion and/or position of the carrying unit. The information output of the motion and/or position determination device may be used for control of the drive unit. The information may be obtained from an, e.g. optical, determination (or detection) of motion and/or position of the carrying unit. The motion and/or position determination device may thus, comprise at least one, e.g. optical, determination or detection element, e.g. a sensor element, adapted to determine or detect a motion and/or a position of the carrying unit. The motion and/or position determination device is preferably also arranged inside the inner space of the guiding unit so that its operation cannot be negatively affected by build material.

The disclosure also relates to a carrying device for a powder module as specified above. All annotations regarding the powder module apply to the carrying device in analogous manner.

Moreover, the invention relates to an apparatus for additively manufacturing three-dimensional objects by means of successive layerwise selective irradiation and consolidation of layers of a build material which can be consolidated by means of an energy beam, the apparatus comprising at least one powder module as specified above. All annotations regarding the powder module apply to the apparatus in analogous manner.

The apparatus comprises a number of functional units each having at least one specific function during operation of the apparatus. The functional units are thus, operable or operated during operation of the apparatus. Each functional unit may comprise at least one functional sub-unit.

An exemplary functional unit may be a process chamber unit (hereinafter "process chamber"), in which the successive layerwise selective irradiation and consolidation of layers of build material takes place. The process chamber comprises wall elements or wall element portions delimiting an inner process chamber volume.

Another exemplary functional unit may be a build material application unit, e.g. a recoating unit, configured to apply layers of build material which is to be selectively irradiated and consolidated in the build plane of the apparatus. The build material application unit may comprise at least one functional sub-unit, e.g. a recoating blade, which is moveably supported relative to the build plane of the apparatus so as to apply respective build material layers.

Another exemplary functional unit may be an irradiation unit configured to selectively irradiate and thereby, consolidate portions of a layer of build material with at least one energy beam. The irradiation unit may comprise a functional sub-unit for generating an energy beam, e.g. a beam generating unit, and/or a functional sub-unit for deflecting an energy beam to different positions of the build plane, e.g. a beam deflecting unit.

The invention further relates to a method for additively manufacturing three-dimensional objects by means of successive layerwise selective irradiation and consolidation of layers of a build material which can be consolidated by means of an energy beam. An apparatus as specified above is used for implementing the method.

Exemplary embodiments of the invention are described with reference to the Fig., whereby:
- Fig. 1: shows a principle drawing of a powder module for an apparatus for additively manufacturing three-dimensional objects according to an exemplary embodiment; and
- Fig.2 - 4: each show an enlarged view of the detail A of Fig. 1.

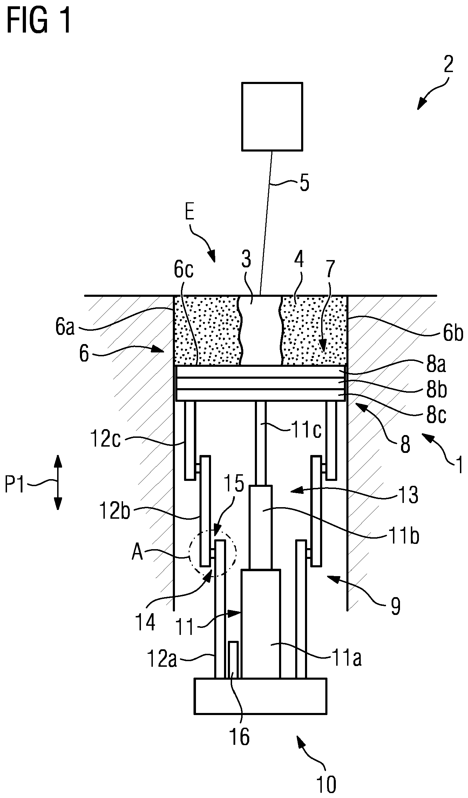

Fig. 1 shows a principle drawing of a powder module 1 for an apparatus 2 for additively manufacturing three-dimensional objects 3, e.g. technical components, by means of successive layerwise selective irradiation and accompanying consolidation of layers of a powdered build material 4, e.g. a metal powder, which can be consolidated by means of at least one energy beam 5, e.g. a laser beam, according to an exemplary embodiment. The apparatus 2 can be a selective laser melting apparatus, for instance.

According to the exemplary embodiment of Fig. 1, the powder module 1 is embodied as a build module, in which the actual additive build-up of three-dimensional objects 3 takes place and which is successively filled with build material 4 during operation of the apparatus 2. Yet, the powder module 1 could also be embodied as a dose module, which is filled with build material 4 and which is adapted to successively dose a specific amount of build material 4 which is to be applied in a build plane E of the apparatus 2 during operation of the apparatus 2 or as an overflow module, which is adapted to successively receive build material 4 which was not consolidated during operation of the apparatus 2.

The modular aspect of the powder module 1 particularly may result from that the (entire) powder module 1 may be a functional unit which can be separately handled, e.g. separately moved. As such, the powder module 1 may be moved to a powder module related operating position of the apparatus 2.

As is apparent from Fig. 1, the powder module 1 comprises a powder chamber 6 having a power chamber volume 7 which is fillable or filled with build material 4. The powder chamber 6 and the powder chamber volume 7, respectively are defined by structural elements, i.e. walls 6a, 6b or wall portions, of the powder module 1. The bottom 6c of the powder chamber 6 is defined by a carrying unit 8 of a carrying device 9 of the powder module 1 which will be explained below in more detail.

The powder module 1 comprises a carrying device 9 for carrying build material 4 or - in the given exemplary case that the powder module 1 is a build module - a three-dimensional object 3 which is additively built during operation of the apparatus 2 the powder module 1 is allocated to.

One functional unit of the carrying device 9 is the carrying unit 8. The carrying unit 8 is adapted to carry build material 4 and the three-dimensional object 3 which is additively built during operation of the apparatus 2 the powder module 1 is allocated to. As is apparent from the Fig., the carrying unit 8 is arranged within the powder chamber 6. As is also apparent from the Fig., the carrying unit 8 may comprise a number of typically plate-like shaped functional elements 8a - 8c in a (vertically) stacked arrangement. Respective functional elements 8a - 8c are a build plate element (8a) defining the build plane E of the apparatus 2 the powder module 1 is allocated to, an optional tempering element (8b), particularly a heating element, for tempering, particularly heating, the build plate element, and a carrying element (8c) for carrying the build plate element and the tempering element. As mentioned above, the carrying unit 8, i.e. particularly the build plate element, may define the bottom 6c of the powder chamber 6.

The carrying unit 8 is moveably supported along a (primary) motion axis (indicated by double-arrow P1) between a first position, particularly a lower end position, and a second position, particularly an upper end position, relative to the powder chamber 6 or within the powder chamber, respectively. The motion axis is typically a vertically oriented translational axis. During operation of the apparatus 2 the powder module 1 is allocated to, motions of the carrying unit 8 may be incremental, whereby each incremental motion of the carrying unit 8 may correspond to the thickness of a build material layer which is applied in the build plane E of the apparatus 2.

Another functional unit of the carrying device 9 is a drive unit 10. The drive unit 10 is adapted to generate a drive force for moving the carrying unit 8 between the first position and the second position or vice versa. The drive unit 10 may be built as or comprise at least one motor, e.g. an electric motor.

Another functional unit of the carrying device 9 is a coupling unit 11. The coupling unit 11 is adapted to structurally, particularly mechanically, couple the drive unit 10 with the carrying unit 8. As such, the coupling unit 11 is also adapted to transmit a drive force generated by the drive unit 10 to the carrying unit 8. Thus, the drive unit 10 and the coupling unit 11 build the drive train for moving the carrying unit 8.

The coupling unit 11 is extendable between a first extension state and a second extension state (the coupling unit 11 is shown in an intermediate state in between the first and second extension state in Fig. 1). The first extension state of the coupling unit 11 corresponds to the first position of the carrying unit 8, i.e. the coupling unit 11 is extended to the first extension state when the carrying unit 8 is moved to the first position. Since the first position of the carrying unit 8 is a lower end position, the first extension state of the coupling unit 11 may be a non-extended state in which the coupling unit 11 is not extended. The second extension state of the coupling unit 11 corresponds to the second position of the carrying unit 8, i.e. the coupling unit 11 may be extended to the second extension state when the carrying unit 8 is moved to the second position. Since the second position of the carrying unit 8 is an upper end position, the second extension state of the coupling unit 11 may be an extended state in which the coupling unit 11 is (fully) extended.

As is shown in Fig. 1, the coupling unit 11 comprises a plurality of coupling segments 11a - 11c being moveably supported relative to each other along a motion axis (which coincides with the motion axis of the carrying unit 8) between a first arrangement corresponding to the first extension state of the coupling unit 11 and a second arrangement corresponding to the second extension state of the coupling unit 11 (the coupling unit 11 is shown in an intermediate arrangement in between the first and second extension state in Fig. 1).

Each coupling segment 11a - 11c is provided with the required structural, particularly mechanical, stability required for the coupling function of the coupling unit 11; as such, each coupling segment 11a - 11c may be built of or comprise a suitable material, e.g. a metal, or material structure of required structural, particularly mechanical, stability. According to the embodiment of Fig. 1, the coupling segments 11a - 11c are arranged in a telescopic arrangement; thus, the coupling unit 11 is a telescopic coupling unit 11 which is extendable between a collapsed state (see first extension state of the coupling unit 11) and an extended state (see second extension state of the coupling unit 11).

Another functional unit of the carrying device 9 is a guiding unit 12 for guiding motions of the carrying unit 8 between the first and second position. As such, the guiding unit 12 is also adapted to stabilize the carrying unit 8 in a desired, particularly horizonal, orientation (x-, y-orientation) relative to the powder chamber 6. The guiding unit 12 therefore, is provided with the required structural, particularly mechanical, stability, i.e. particularly rigidity and/or stiffness, allowing for stabilizing the carrying unit 8 in a desired, particularly horizonal, orientation.

Similar to the coupling unit 11, the guiding unit 12 is extendable between a first extension state and a second extension state. The first extension state of the guiding unit 12 corresponds to the first position of the carrying unit 8, i.e. the guiding unit 12 may be extended to the first extension state when the carrying unit 8 is moved to the first position. Since the first position of the carrying unit is a lower end position, the first extension state of the guiding unit may be a non-extended state in which the guiding unit 12 is not extended. The second extension state of the guiding unit 12 corresponds to the second position of the carrying unit 8, i.e. the guiding unit 12 may be extended to the second extension state when the carrying unit 8 is moved to the second position. Since the second position of the carrying unit 8 is an upper end position, the second extension state of the guiding unit 12 may be an extended state in which the guiding unit 12 is (fully) extended.

As is shown in Fig. 1, the coupling unit 12 also comprises a plurality of guiding segments 12a - 12c being moveably supported relative to each other along a motion axis (which coincides with the motion axis of the carrying unit 8) between a first arrangement corresponding to the first extension state of the guiding unit 12 and a second arrangement corresponding to the second extension state of the guiding unit 12 (the guiding unit 12 is also shown in an intermediate arrangement in between the first and second extension state in Fig. 1).

Each guiding segment 12a - 12c is provided with the required structural, particularly mechanical, stability required for the coupling function of the guiding unit 12; as such, each guiding segment 12a - 12c may be built of or comprise a suitable material, e.g. a metal, or material structure of required structural, particularly mechanical, stability. According to the embodiment of Fig. 1, the guiding segments 12a - 12c are arranged in a telescopic arrangement; thus, the guiding unit 12 is a telescopic guiding unit 12 which is extendable between a collapsed state (see first extension state of the guiding unit 12) and an extended state (see second extension state of the guiding unit 12). Fig. 1 also shows that guiding segments 12a - 12c being moveably supported relative to each other may overlap in the direction of the motion axis which particularly results in structural stability of the arrangement of the guiding segments 12a - 12c.

As is apparent from Fig. 1, the guiding unit 12 entirely surrounds the coupling unit 11. Since both the guiding unit 12 and the coupling unit 11 are extendable, surrounding the coupling unit 11 by the guiding unit 12 can be assured in any extension state. The guiding unit 12 defines an inner volume 13 in which the coupling unit 11 is arranged. The guiding unit 12 may thus, be deemed as housing of/for the coupling unit 11. The inner volume 13 of the guiding unit is shielded from the outside against undesired entry of build material 4. Hence, by arranging the coupling unit 11 within the inner volume 13 of the guiding unit 12, build material cannot negatively affect moving and positioning the carrying unit 8 relative to the powder chamber 6.

The powder module 1 may further comprise at least one motion and/or position determination device 16, particularly a motion and/or position detection device, for determining, particularly detecting, a motion and/or a position of the carrying unit 8, particularly relative to a reference position of the powder module 1, e.g. the powder chamber 6, or the apparatus 2 the powder module 1 is allocated to. The motion and/or position determination device 16 may be adapted to output an information about motion and/or position of the carrying unit 8. The information output of the motion and/or position determination device 16 may be used for control of the drive unit 10. The information may be obtained from an, e.g. optical, determination (or detection) of motion and/or position of the carrying unit 8. The motion and/or position determination device 16 may thus, comprise at least one, e.g. optical, determination or detection element (not shown), e.g. a sensor element, adapted to determine or detect a motion and/or a position of the carrying unit 8. As is apparent from Fig. 1, the motion and/or position determination device 16 may also be arranged inside the inner volume 13 of the guiding unit 12 so that its operation cannot be negatively affected by build material 4.

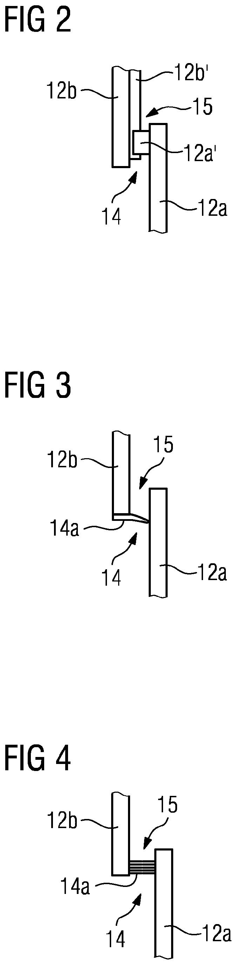

Fig. 2 - 4 each show an enlarged view of the detail A of Fig. 1.

As is apparent from Fig. 2, each guiding segment 12a - 12c may be provided with suitable guiding elements 12a', 12b', e.g. protrusions (12b') and/or receptacles (12a'), which co-act, e.g. engage, so as to provide a reliable guiding; according to the exemplary embodiment of Fig. 2, a first guiding element provided with guiding segment 12b is built as a protrusion 12b' in the shape of a guiding rail, and a second guiding element provided with guiding segment 12a is built as a receptacle 12a', whereby the protrusion engages the receptacle. Of course, other arrangements and/or configurations of first and second guiding elements is conceivable.

Fig. 2 - 4 show that the powder module 1 may further comprise a sealing unit 14. The sealing unit 14 is adapted to seal a radial gap 15 between two (directly adjacently disposed) guiding segments 12a, 12b being moveably supported relative to each other. The sealing unit 1 provides a powder-proof sealing. As is apparent from Fig. 2 - 4, the sealing unit 14 comprises at least one sealing element 14a, 14b disposed or extending between at least two guiding segments 12a, 12b being moveably supported relative to each other.

According to the exemplary embodiment of Fig. 3, the sealing element 14a is built as a, particularly ring-shaped, sealing lip extending between an outer wall portion of guiding segment 12a and an inner wall portion of guiding segment 12b. The sealing lip may be provided, i.e. particularly connected, with guiding segment 12a or guiding segment 12b. The sealing lip may be flexible, i.e. be built of a flexible material, e.g. an elastomer, or a flexible material structure, e.g. an elastomer structure.

According to the exemplary embodiment of Fig. 4, the sealing element 14a is built as a, particularly ring-shaped, sealing brush extending between an outer wall portion of guiding segment 12a and an inner wall portion of guiding segment 12b. The sealing brush may be provided, i.e. particularly connected, with guiding segment 12a or guiding segment 12b. The sealing brush may comprise a plurality of flexible bristles.

Reverting to Fig. 2, the sealing unit 14 may also comprise a plurality of sealing elements co-acting with each other so as to provide a suitable sealing. Thereby, a first sealing element be built as or comprise a receptacle (see reference numeral 12a') for a receiving a protrusion (see reference numeral 12b'), and a second sealing element may be built as or comprise a respective protrusion (see reference numeral 12b') for engaging with respective a receptacle (see reference numeral 12a'). As such, respective sealing elements may be provided with respective guiding elements mentioned above.

## Claims

1. Powder module (1) for an apparatus for additively manufacturing three-dimensional objects, the powder module (1) comprising a powder chamber (6) having a power chamber volume (7) and a carrying device (9), the carrying device (9) comprising:
- a carrying unit (8) being moveably supported along a motion axis between a first position, particularly a lower end position, and a second position, particularly an upper end position, relative to the powder chamber (6),
- a drive unit (10) for generating a drive force for moving the carrying unit (8) between the first position and the second position or vice versa,
- a coupling unit (11) for coupling the carrying unit (8) with the drive unit (10), the coupling unit (11) being extendable between a first extension state, particularly corresponding to the first position of the carrying unit (8), and a second extension state, particularly corresponding to the second position of the carrying unit (8),
- a guiding unit (12) surrounding the coupling unit (11), the guiding unit (12) being extendable between a first extension state, particularly corresponding to the first position of the carrying unit (8), and a second extension state, particularly corresponding to the second position of the carrying unit (8).

2. Powder module according to Claim 1, **wherein** the coupling unit (11) comprises a plurality of coupling segments (11a - 11c) being moveably supported relative to each other along a motion axis between a first arrangement corresponding to the first extension state of the coupling unit (11) and a second arrangement corresponding to the second extension state of the coupling unit (11).

3. Powder module according to Claim 2, **wherein** at least two coupling segments (11a - 11c) being moveably supported relative to each other at least partly overlap in the direction of the motion axis.

4. Powder module according to Claim 2 or 3, **wherein** the coupling segments (11a - 11c) are arranged in a telescopic arrangement.

5. Powder module according to any of the preceding Claims, **wherein** the guiding unit (12) comprises a plurality of guiding segments (12a - 12c) being moveably supported relative to each other along a motion axis between a first arrangement corresponding to the first extension state of the guiding unit (12) and a second arrangement corresponding to the second extension state of the guiding unit (12).

6. Powder module according Claim 5, **wherein** at least two guiding segments (12a - 12c) being moveably supported relative to each other at least partly overlap in the direction of the motion axis.

7. Powder module according to Claim 5 or 6, **wherein** the guiding segments (12a - 12c) are arranged in a telescopic arrangement.

8. Powder module according to any of Claims 5 - 7, **comprising** a sealing unit (14) for sealing a gap between two guiding segments (12a - 12c) being moveably supported relative to each other, the sealing unit (14) comprising at least one sealing element (14a), particularly disposed between at least two guiding segments (12a - 12c) being moveably supported relative to each other.

9. Powder module according to Claim 8, **wherein** the sealing element (14a) is a, particularly ring-shaped, sealing lip extending between an outer wall portion of a, particularly cylindrical, first guiding segment (12a - 12c) and an inner wall portion of a, particularly cylindrical, second guiding segment (12a - 12c).

10. Powder module according to Claim 8 or 9, **wherein** the sealing element (14a) is a, particularly ring-shaped, sealing brush extending between an outer wall portion of a, particularly cylindrical, first guiding segment (12a - 12c) and an inner wall portion of a, particularly cylindrical, second guiding segment (12a - 12c).

11. Powder module according to any of Claims 8 - 10, **wherein** the sealing unit comprises at least two sealing elements (14a), whereby a first sealing element provided with a first or second guiding segment (12a - 12c) is a receptacle for a receiving a protrusion of a second sealing element, and a second sealing element provided with a second or first guiding element (12a - 12c) is a respective protrusion for being received in respective a receptacle.

12. Powder module according to any of the preceding Claims, **comprising** at least one motion and/or position determination device (16) for determining a motion and/or a position of the carrying unit (8), particularly relative to a reference position.

13. Apparatus (2) for additively manufacturing three-dimensional objects (3) by means of successive layerwise selective irradiation and consolidation of layers of a build material (4) which can be consolidated by means of an energy beam (5), the apparatus (2) comprising at least one powder module (1) according to any of Claims 1 - 12.

14. Method for additively manufacturing three-dimensional objects (3) by means of successive layerwise selective irradiation and consolidation of layers of a build material (4) which can be consolidated by means of an energy beam (5), wherein an apparatus (2) according to Claim 13 is used for implementing the method.

## Patentansprüche

1. Pulvermodul (1) für eine Vorrichtung zur additiven Herstellung dreidimensionaler Objekte, wobei das Pulvermodul (1) eine Pulverkammer (6) mit einem Pulverkammervolumen (7) und eine Tragevorrichtung (9) umfasst, wobei die Tragevorrichtung (9) umfasst:
- eine Trageeinheit (8), die entlang einer Bewegungsachse zwischen einer ersten Position, insbesondere einer unteren Endposition, und einer zweiten Position, insbesondere einer oberen Endposition, relativ zu der Pulverkammer (6) beweglich gelagert ist,
- eine Antriebseinheit (10) zum Erzeugen einer Antriebskraft zum Bewegen der Trageeinheit (8) zwischen der ersten Position und der zweiten Position oder umgekehrt,
- eine Kopplungseinheit (11) zum Koppeln der Trageeinheit (8) mit der Antriebseinheit (10), wobei die Kopplungseinheit (11) zwischen einem ersten ausgefahrenen Zustand, insbesondere entsprechend der ersten Position der Trageeinheit (8), und einem zweiten ausgefahrenen Zustand, insbesondere entsprechend der zweiten Position der Trageeinheit (8), ausfahrbar ist,
- eine Führungseinheit (12), die die Kupplungseinheit (11) umgibt, wobei die Führungseinheit (12) zwischen einem ersten ausgefahrenen Zustand, der insbesondere der ersten Position der Trageeinheit (8) entspricht, und einem zweiten ausgefahrenen Zustand, der insbesondere der zweiten Position der Trageeinheit (8) entspricht, ausfahrbar ist.

2. Pulvermodul nach Anspruch 1, **worin** die Kupplungseinheit (11) eine Vielzahl von Kupplungssegmenten (11a - 11c) aufweist, die relativ zueinander entlang einer Bewegungsachse zwischen einer ersten Anordnung, die dem ersten ausgefahrenen Zustand der Kupplungseinheit (11) entspricht, und einer zweiten Anordnung, die dem zweiten ausgefahrenen Zustand der Kupplungseinheit (11) entspricht, beweglich gelagert sind.

3. Pulvermodul nach Anspruch 2, **worin** mindestens zwei relativ zueinander beweglich gelagerte Kupplungssegmente (11 a - 11 c) sich in Richtung der Bewegungsachse mindestens teilweise überdecken.

4. Pulvermodul nach Anspruch 2 oder 3, **worin** die Kupplungssegmente (11a - 11c) teleskopartig angeordnet sind.

5. Pulvermodul nach einem der vorstehenden Ansprüche, **worin** die Führungseinheit (12) eine Mehrzahl von Führungssegmenten (12a - 12c) aufweist, die relativ zueinander entlang einer Bewegungsachse zwischen einer ersten Anordnung, die dem ersten ausgefahrenen Zustand der Führungseinheit (12) entspricht, und einer zweiten Anordnung, die dem zweiten ausgefahrenen Zustand der Führungseinheit (12) entspricht, beweglich gelagert sind.

6. Pulvermodul nach Anspruch 5, **worin** mindestens zwei Führungssegmente (12a - 12c), die relativ zueinander beweglich gelagert sind, sich in Richtung der Bewegungsachse mindestens teilweise überdecken.

7. Pulvermodul nach Anspruch 5 oder 6, **worin** die Führungssegmente (12a - 12c) teleskopartig angeordnet sind.

8. Pulvermodul nach einem der Ansprüche 5 - 7, **umfassend** eine Dichtungseinheit (14) zum Abdichten eines Spalts zwischen zwei Führungssegmenten (12a - 12c), die relativ zueinander beweglich gelagert sind, wobei die Dichtungseinheit (14) mindestens ein Dichtungselement (14a) umfasst, das insbesondere zwischen mindestens zwei Führungssegmenten (12a - 12c) angeordnet ist, die relativ zueinander beweglich gelagert sind.

9. Pulvermodul nach Anspruch 8, **worin** das Dichtungselement (14a) eine, insbesondere ringförmige, Dichtungslippe ist, die sich zwischen einem äußeren Wandabschnitt eines, insbesondere zylindrischen, ersten Führungssegments (12a - 12c) und einem inneren Wandabschnitt eines, insbesondere zylindrischen, zweiten Führungssegments (12a - 12c) befindet.

10. Pulvermodul nach Anspruch 8 oder 9, **worin** das Dichtungselement (14a) eine, insbesondere ringförmige, Dichtungsbürste ist, die sich zwischen einem äußeren Wandabschnitt eines, insbesondere zylindrischen, ersten Führungssegments (12a - 12c) und einem inneren Wandabschnitt eines, insbesondere zylindrischen, zweiten Führungssegments (12a - 12c) befindet.

11. Pulvermodul nach einem der Ansprüche 8 - 10, **worin** die Dichtungseinheit mindestens zwei Dichtungselemente (14a) umfasst, wobei ein erstes Dichtungselement, das ein erstes oder zweites Führungssegment (12a - 12c) aufweist, eine Fassung zur Aufnahme eines Vorsprungs eines zweiten Dichtungselements ist, und ein zweites Dichtungselement, das ein zweites oder erstes Führungselement (12a - 12c) aufweist, ein entsprechender Vorsprung zur Aufnahme in einer entsprechenden Fassung ist.

12. Pulvermodul nach einem der vorstehenden Ansprüche, **umfassend** mindestens eine Bewegungs- und/oder Positionsbestimmungsvorrichtung (16) zur Bestimmung einer Bewegung und/oder einer Position der Trageeinheit (8), insbesondere relativ zu einer Referenzposition.

13. Vorrichtung (2) zur additiven Herstellung von dreidimensionalen Objekten (3) durch aufeinanderfolgende schichtweise selektive Bestrahlung und Verfestigung von Schichten eines Baustoffs (4), der mittels eines Energiestrahls (5) verfestigt werden kann, wobei die Vorrichtung (2) mindestens ein Pulvermodul (1) nach einem der Ansprüche 1 - 12 umfasst.

14. Verfahren zur additiven Herstellung dreidimensionaler Objekte (3) durch aufeinanderfolgende schichtweise selektive Bestrahlung und Verfestigung von Schichten eines mittels Energiestrahl (5) verfestigbaren Baustoffes (4), wobei zur Durchführung des Verfahrens eine Vorrichtung (2) nach Anspruch 13 verwendet wird.

## Revendications

1. Module de poudre (1) pour un appareil pour fabriquer avec des additifs des objets tridimensionnels, le module de poudre (1) comprenant une chambre de poudre (6) ayant un volume de chambre de poudre (7) et un dispositif porteur (9), le dispositif porteur (9) comprenant :
- une unité porteuse (8) supportée de manière mobile le long d'un axe de mouvement entre une première position, en particulier une position inférieure, et une deuxième position, en particulier une position supérieure, par rapport à la chambre de poudre (6),
- une unité d'entraînement (10) pour générer une force d'entraînement pour déplacer l'unité porteuse (8) entre la première position et la deuxième position ou vice-versa,
- une unité de couplage (11) pour coupler l'unité porteuse (8) à l'unité d'entraînement (10), l'unité de couplage (11) étant extensible entre un premier état d'extension, correspondant en particulier à la première position de l'unité porteuse (8), et un deuxième état d'extension, correspondant en particulier à la deuxième position de l'unité porteuse (8),
- une unité de guidage (12) entourant l'unité de couplage (11), l'unité de guidage (12) étant extensible entre un premier état d'extension, correspondant en particulier à la première position de l'unité porteuse (8), et un deuxième état d'extension, correspondant en particulier à la deuxième position de l'unité porteuse (8).

2. Module de poudre selon la revendication 1, dans lequel l'unité de couplage (11) comprend une pluralité de segments de couplage (11a - 11c) supportés de manière mobile les uns par rapport aux autres le long d'un axe de mouvement entre un premier agencement correspondant au premier état d'extension de l'unité de couplage (11) et un deuxième agencement correspondant au deuxième état d'extension de l'unité de couplage (11).

3. Module de poudre selon la revendication 2, dans lequel au moins deux segments de couplage (11a - 11c) supportés de manière mobile l'un par rapport à l'autre se chevauchent au moins partiellement dans la direction de l'axe de mouvement.

4. Module de poudre selon la revendication 2 ou 3, dans lequel les segments de couplage (11a - 11c) sont disposés de manière télescopique.

5. Module de poudre selon l'une quelconque des revendications précédentes, dans lequel l'unité de guidage (12) comprend une pluralité de segments de guidage (12a - 12c) supportés de manière mobile les uns par rapport aux autres le long d'un axe de mouvement entre un premier agencement correspondant au premier état d'extension de l'unité de guidage (12) et un deuxième agencement correspondant au deuxième état d'extension de l'unité de guidage (12).

6. Module de poudre selon la revendication 5, dans lequel au moins deux segments de guidage (12a - 12c) supportés de manière mobile l'un par rapport à l'autre se chevauchent au moins partiellement dans la direction de l'axe de mouvement.

7. Module de poudre selon la revendication 5 ou 6, dans lequel les segments de guidage (12a - 12c) sont disposés de manière télescopique.

8. Module de poudre selon l'une des revendications 5 à 7, comprenant une unité de scellage (14) pour sceller un espace entre deux segments de guidage (12a - 12c) supportés de manière mobile l'un par rapport à l'autre, l'unité de scellage (14) comprenant au moins un élément de scellage (14a), disposé en particulier entre au moins deux segments de guidage (12a - 12c) supportés de manière mobile l'un par rapport à l'autre.

9. Module de poudre selon la revendication 8, dans lequel l'élément de scellage (14a) est une lèvre de scellage annulaire s'étendant entre une partie de paroi extérieure d'un premier segment de guidage cylindrique (12a - 12c) et une partie de paroi intérieure d'un deuxième segment de guidage cylindrique (12a - 12c).

10. Module de poudre selon la revendication 8 ou 9, dans lequel l'élément de scellage (14a) est une brosse de scellage annulaire s'étendant entre une partie de paroi extérieure d'un premier segment de guidage cylindrique (12a - 12c) et une partie de paroi intérieure d'un deuxième segment de guidage cylindrique (12a - 12c).

11. Module de poudre selon l'une des revendications 8 à 10, dans lequel l'unité de scellage comprend au moins deux éléments de scellage (14a), moyennant quoi un premier élément de scellage doté d'un premier ou d'un deuxième segment de guidage (12a - 12c) est un réceptacle pour recevoir une protubérance d'un deuxième élément de scellage, et un deuxième élément de scellage doté d'un deuxième ou d'un premier élément de guidage (12a - 12c) est une protubérance respective pour être reçu dans le réceptacle respectif.

12. Module de poudre selon l'une quelconque des revendications précédentes, comprenant au moins un dispositif (16) de détermination de mouvement et/ou de position pour déterminer un mouvement et/ou une position de l'unité porteuse (8), en particulier par rapport à une position de référence.

13. Appareil (2) pour fabriquer avec des additifs des objets tridimensionnels (3) au moyen de l'irradiation et de la consolidation sélectives dans le sens de couches successives d'une matière de construction (4) qui peuvent être consolidées au moyen d'un faisceau d'énergie (5), l'appareil (2) comprenant au moins un module de poudre (1) selon l'une des revendications 1 à 12.

14. Procédé pour fabriquer avec des additifs des objets tridimensionnels (3) au moyen de l'irradiation et de la consolidation sélectives dans le sens de couches successives d'une matière de construction (4) qui peuvent être consolidées au moyen d'un faisceau d'énergie (5), dans lequel un appareil (2) selon la revendication 13 est utilisé pour appliquer le procédé.
